# EUROPÄISCHE PATENTSCHRIFT

(11) **EP 0 835 170 B1**
(45) Veröffentlichungstag und Bekanntmachung des Hinweises auf die Patenterteilung: **24.11.1999**
(21) Anmeldenummer: 96922876.6
(22) Anmeldetag: 21.06.1996
(51) Int. Cl.: B23K 20/12

(54) **VERFAHREN UND VORRICHTUNG ZUM REIBSCHWEISSEN VON WERKSTÜCKEN**
PROCESS AND DEVICE FOR FRICTION WELDING OF WORKPIECES
PROCEDE ET DISPOSITIF POUR LE SOUDAGE PAR FRICTION DE PIECES

(30) Priorität: 27.06.1995 DE 19523240
(43) Veröffentlichungstag der Anmeldung: 15.04.1998
(73) Patentinhaber: KUKA Schweissanlagen GmbH, 86165 Augsburg (DE)
(72) Erfinder: BÖCK, Johann, D-86438 Kissing (DE); GRÖGER, Walter, D-84494 Emersacker (DE); MAZAC, Karel, D-86316 Friedberg (DE)
(74) Vertreter: Ernicke, Hans-Dieter, Dipl.-Ing.
(86) Internationale Anmeldenummer: EP9602702
(87) Internationale Veröffentlichungsnummer: WO9701412

(56) Entgegenhaltungen:
- GB-A- 2 091 153
- US-A- 3 273 233
- US-A- 3 973 715

## Beschreibung

Die Erfindung betrifft ein Verfahren und eine Vorrichtung zum Reibschweißen von Werkstücken aus unterschiedlichen Werkstoffen oder mit unterschiedlichen Werkstoffeigenschaften, insbesondere unterschiedlicher Härte und/oder Schmelztemperatur, mit den Merkmalen im Oberbegriff des Verfahrens- und Vorrichtungshauptanspruchs.

Reibschweißverfahren und Reibschweißvorrichtungen sind in in verschiedenen Ausführungen in der Praxis bekannt. Die beiden zu verschweißenden Werkstücke werden z.B. unter Reibkontakt relativ zueinander gedreht, wobei sie an der Reibstelle erhitzt und plastifiziert werden. Nach einer vorgesehenen Zeitspanne wird der Drehantrieb gestoppt, wodurch die Relativdrehung bremsend ausläuft und zum Stillstand kommt. Während des Auslaufs werden die beiden Werkstücke durch einen Axialhub gestaucht und verbunden. Bei konventionellen Reibschweißverfahren dauert der Reibvorgang mehrere Sekunden, wobei Drehzahlen von 1000 U/min und mehr zum Einsatz kommen. Dieses konventionelle Verfahren ist für gleiche oder in den Eigenschaften einander sehr ähnliche Werkstoffe praktikabel und hat sich bewährt. Für das Reibschweißen von Werkstücken aus unterschiedlichen Werkstoffen, z. B. Aluminium und Stahl, oder für Werkstücke vom gleichen Grundwerkstoff, aber unterschiedlichen Werkstoffeigenschaften, z. B. weiche oder harte Leichtmetallegierung, läßt sich diese Reibschweißtechnik nicht zufriedenstellend einsetzen. Die Reibschweißverbindungen haben nicht die gewünschte Festigkeit und auch nicht eine ausreichend reproduzierbare Qualität.

Es ist daher Aufgabe der vorliegenden Erfindung, ein Reibschweißverfahren und eine zugehörige Vorrichtung aufzuzeigen, die auch für Werkstücke mit unterschiedlichen Werkstoffen oder unterschiedlichen Werkstoffeigenschaften zu einer guten Schweißqualität führen.

Die Erfindung löst diese Aufgabe mit den Merkmalen im Verfahrens- und Vorrichtungshauptanspruch. Bei der erfindungsgemäßen Reibschweißtechnik wird der gesamte Drehwinkel während des Reibvorgangs auf einen niedrigen Wert begrenzt. Nach den mit der Erfindung gewonnenen praktischen Erfahrungen sollte der Drehwinkel nicht größer als 1080° bzw. 3 ganze Umdrehungen sein. Für die häufig eingesetzten Werkstoffpaarungen Stahl/Aluminium oder weiche/harte Leichtmetallegierung sollte der Drehwinkel zwischen 180° bis 720° liegen, wobei optimale Ergebnisse für einen Drehwinkelbereich von 290° bis 430° gewonnen werden. Für andere Werkstoffpaarungen können die Drehwinkelbereiche variieren. Sie liegen auf jeden Fall wesentlich niedriger als bei konventionellen Verfahren.

Das erfindungsgemäße Verfahren und die zugehörige Vorrichtung sind für alle Einsatzfälle geeignet, in denen die Werkstücke aus Werkstoffen bestehen mit signifikanten Unterschieden in den Werkstoffeigenschaften, insbesondere der Härte und/oder der Schmelztemperatur. Solche Paarungen ergeben sich zum einen aus völlig unterschiedlichen Werkstoffen, wie Stahl und Leichtmetallegierungen, z. B. Aluminium, Magnesium/Aluminium etc.. Anwendungsbereiche sind auch Leichtmetallegierungen oder Nichteisenmetalle untereinander, wenn sich in der Paarung die Werkstoffe durch unterschiedliche Wärmebehandlung, Legierungsbildung etc. in der Härte, der Festigkeit, der Schmelztemperatur etc. unterscheiden. Die Schmelzeigenschaften können auch aus anderen Gründen stark unterschiedlich sein.

Der bevorzugte Einsatzbereich sind rohrförmige, insbesondere zylinderrohrförmige, Werkstücke. Es sind aber auch Paarungen massiv/rohrförmig möglich. In Versuchen haben sich gute Ergebnisse für Abmessungsverhältnisse Außendurchmesser/Wandstärke der Rohre von 10:1 oder größer, vorzugsweise 20:1 oder größer, ergeben.

In den Unteransprüchen sind vorteilhafte Ausgestaltungen der Erfindung angegeben.

Die Erfindung ist in den Zeichnungen beispielsweise und schematisch dargestellt. Im einzelnen zeigen:
- Figur 1 :: eine Reibschweißvorrichtung in Seitenansicht und
- Figur 2 :: einen Reibschweißvorgang im Ablaufdiagramm mit den Veränderungen von Drehzahl, Druck und Weg über der Zeit.

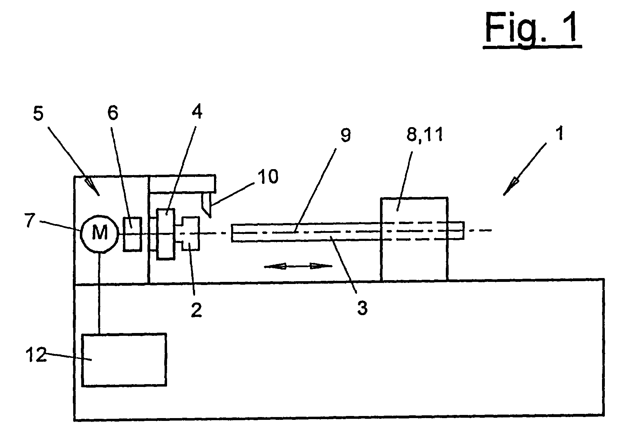

Figur 1 zeigt eine Reibschweißvorrichtung (1) zur Verbindung zweier Werkstücke (2,3) durch Reibschweißen. Hierbei handelt es sich um eine Einkopfmaschine, bei der das eine Werkstück (2) in einer als Drehfutter ausgebildeten Spanneinrichtung (4) und das andere Werkstück (3) in einer axial verfahrbaren Spanneinrichtung (8) gespannt ist. Die Spanneinrichtung (8) stellt zugleich die Stauchvorrichtung (11) dar, mit der gegen Ende des Reibvorgangs der Stauchhub oder Endschlag zur axialen Verbindung der beiden Werkstücke (2,3) erfolgt.

In Abwandlung des gezeigten Ausführungsbeispiels kann es sich auch um eine Doppelkopfmaschine handeln, die mit zwei Drehfuttern ausgerüstet ist. Darüber hinaus sind auch noch andere Maschinenabwandlungen möglich.

Die beiden Werkstücke (2,3) sind vorzugsweise als zylindrische Rohre ausgebildet oder weisen an der Schweißstelle Rohrabschnitte auf. Sie haben ein Abmessungsverhältnis von Außendurchmesser/Wandstärke von mindestens 10:1, vorzugsweise 20:1 oder größer. Bevorzugter Einsatzbereich sind Wellen oder Achsen im Fahrzeugbau. Darüberhinaus gibt es auch beliebige andere Einsatzbereiche.

Die beiden Werkstücke (2,3) unterscheiden sich signifikant in ihren Werkstückeigenschaften, insbesondere ihrer Härte und/oder Schmelztemperatur. Das Werkstück mit der höheren Härte oder Schmelztemperatur wird vorzugsweise in derjenigen Spanneinrichtung (4) gespannt, die mit dem Drehantrieb (5) verbunden ist. In der gezeigten Ausführungsform handelt es sich um die Verbindung eines Gelenkkopfes (2) aus Stahl mit einer Gelenkwelle (3), die aus einer Aluminiumlegierung besteht. Bei zwei Werkstücken (2,3) mit dem gleichen Grundwerkstoff, z. B. unterschiedlich harten Legierungen, insbesondere Leichtmetallegierungen, wird das härtere oder höherschmelzende Werkstück (2) ebenfalls auf der Drehantriebsseite gespannt.

Der Drehantrieb (5) besteht in an sich bekannter Weise aus einem Motor (7) und einem Getriebe (6), die mit dem Spannfutter (4) verbunden sind. Der Drehantrieb (5) wird über eine Maschinensteuerung (12) betätigt, die vorzugsweise computerisiert und frei programmierbar ist.

Die Reibschweißvorrichtung (1) weist im Bereich der drehenden Spanneinrichtung (4) außerdem eine Vorrichtung (10) zum Planen der Reibfläche des härteren oder höherschmelzenden Werkstücks (2) auf. Im gezeigten Ausführungsbeispiel handelt es sich um einen zustellbaren Drehmeißel, mit dem die Reibfläche plangedreht und dabei senkrecht zur Drehachse (9) der Reibschweißvorrichtung (1) ausgerichtet werden kann. Das Planen der Reibfläche vor dem Reibschweißvorgang in Spannstellung des Werkstücks (2) wird sich günstig auf die Qualität und Reproduzierbarkeit der Reibschweißergebnisse aus.

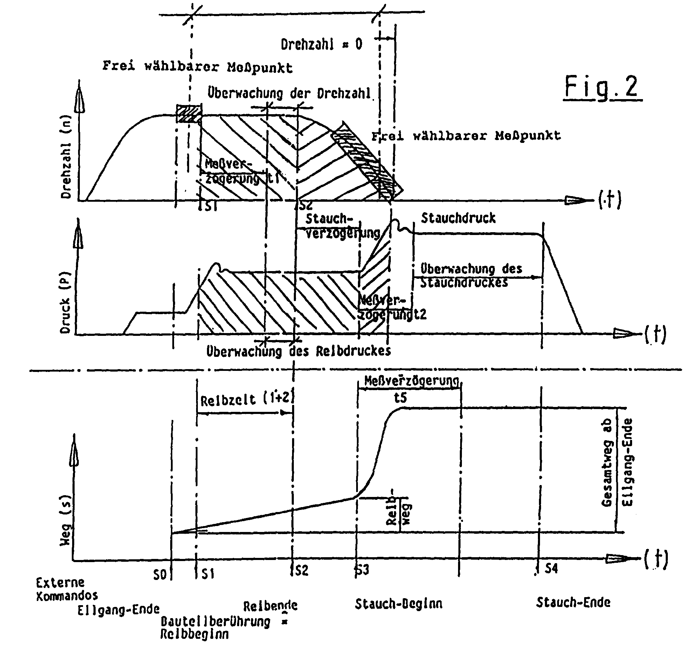

Der Reibschweißvorgang wird nachfolgend anhand des Ablaufdiagramms von Figur 2 näher erläutert.

Vor dem Reibschweißvorgang sind die beiden Werkstücke (2,3) voneinander axial distanziert. Der Drehantrieb (5) wird gestartet und dreht im Leerlauf hoch, wobei zugleich die beiden Werkstücke (2,3) von der Stauchvorrichtung (11) bzw. der Vorschubvorrichtung längs der Drehachse (9) im Eilgang einander angenähert werden.

Für den Reibschweißprozeß hat es sich als günstig erwiesen, eine niedrigere Leerlaufdrehzahl als üblich einzusetzten. Im bevorzugten Ausführungsbeispiel einer Aluminium/Stahl-Verbindung liegt sie bei ca. 300 U/min. Sie kann nach den praktischen Erfahrungen von 50 bis 500 U/min variieren und auch außerhalb dieses Bereichs je nach Werkstoffpaarung liegen.

Wie Figur 2 im unteren Diagramm mit der Angabe des Weges über der Zeit zeigt, wird kurz vor Werkstückkontakt der Eilgang abgeschaltet und die beiden Werkstücke (2,3) einander im Kriechgang genähert. Sobald die Werkstücke (2,3) einander berühren, werden sie an ihren Stirnflächen unter Reibkontakt und mit einer im wesentlichen konstanten Anpreßkraft relativ zueinander gedreht.

Der Drehwinkel der Relativdrehung beim Reibvorgang ist begrenzt. Er bemißt sich vom Reibbeginn bis zum Stillstand der Drehbewegung (Reibvorgang). Der Reibbeginn ist derjenige Zeitpunkt, zu dem eine meßbare und signifikante Werkstückverformung einsetzt und die einhergehende Werkstückverkürzung beginnt. Der Reibbeginn kann mit vorzugsweise geringfügiger Verzögerung nach der ersten Berührung der Werkstücke (2,3) liegen. Die Verzögerung kann durch einerseits durch meßtechnische Gründe und andererseits durch die Zustellgeschwindigkeit und/oder eine eventuell vorgeschaltete sogenannte Anreibzeit bestimmt sein.

Die Reibzeit ist die Zeit von Reibbeginn bis zum Abschalten des Drehantriebs (5). Nach dem Abschalten dreht das Werkstück (2) durch die Massenträgheiten im Antriebsstrang unter Bremswirkung der Reibkräfte noch bis zum Drehungsstillstand weiter.

Der Drehwinkel beträgt im gezeigten Ausführungsbeispiel vorzugsweise 290° bis 430°. Brauchbare Ergebnisse werden auch für einen Drehwinkelbereich zwischen ca. 180° bis 720° erhalten. Nach den bisherigen Erfahrungen sollte der Drehwinkel nicht höher als 1080° liegen.

Der Drehwinkel wird in der gezeigten Ausführungsform nur über die Reibzeit eingestellt und gesteuert. Hierfür sind die Massenträgheiten im Antriebsstrang entsprechend abgestimmt, damit nach Antriebsabschaltung eine rasche Bremsung erfolgt. Es empfiehlt sich dabei insbesondere, die bewegten Massen zu verringern und eine geeignete Übersetzung des Getriebes (6) zu wählen. Dies steht auch im Einklang mit der gewünschten niedrigen Leerlaufdrehzahl von ca. 300 U/min.

Der Drehwinkel wird gemessen, was z.B. exakt und direkt über eine Winkelmessung mittels Drehgeber oder mittelbar und angenähert über eine kontinuierliche Drehzahlmessung und eine Rückrechnung geschieht. Aus meßtechnischen Gründen startet die Drehzahlmessung kurz nach Reibbeginn und endet kurz vor Drehungsstillstand. Das Diagramm von Figur 2 verdeutlicht den Meßbereich. Der gemessene bzw. berechnete Drehwinkel kann dadurch geringfügig kleiner als der tatsächliche Drehwinkel sein.

Die für den gewünschten Drehwinkel oder Drehwinkelbereich erforderliche Reibzeit kann im einfachsten Fall aus Versuchen empirisch ermittelt werden. Die Einstellung der Reibzeit erfolgt an der Maschinensteuerung (12). Ein praktischer Wert für die Reibzeit sind ca. 100 msec bei einer Drehzahl von ca. 300 U/min und einem Drehwinkel von etwa 360°, wobei die Bremsphase nach dem Abschalten ebenfalls ca. 100 msec beträgt.

Wie das mittlere Diagramm von Figur 2 mit der Angabe des Drucks über der Zeit erläutert, erfolgt nach Beendigung der Reibzeit und Abschaltung des Drehantriebs (5) mit einer einstellbaren Stauchverzögerung der Stauchhub. Der Stauchhub kann während der Bremsphase und noch vor Stillstand der Relativdrehung der Werkstücke (2,3) einsetzen. Im unteren Diagramm kann die sich zeitgleich über den Reibvorgang und die anschließende Stauchung ergebende Werkstückverkürzung abgelesen werden.

In der Reibschweißvorrichtung (1) sind unterschiedliche Meßvorrichtungen (nicht dargestellt) angeordnet. So läßt sich beispielsweise der erste Kontakt der Werkstücke (2,3) und/oder der Reibbeginn über die in der Stauchvorrichtung (11) auftretende Kraft oder den Druck feststellen und messen. Alternativ sind auch andere geeignete Meßverfahren und entsprechende Vorrichtungen einsetzbar. Beispielsweise kann auch der Reibbeginn über den Zustellweg bestimmt werden. Beim Reibschweißen, was vornehmlich für Serienfertigung eingesetzt wird, sind die Toleranzen der Werkstücke (2,3) und der Einspannung sehr gering, so daß der Zustellweg eine signifikante Größe in ausreichender Genauigkeit darstellt.

Am Drehantrieb (5) sind ferner geeignete Drehgeber oder andere Meßinstrumente für die Messung des Drehwegs und/oder Drehwinkels vorhanden. In der Maschinensteuerung (12) wird darüber der Drehwinkel ab Reibbeginn bis Drehungsstillstand gemessen bzw. berechnet und überwacht. Außerdem kann hierüber auch die Drehzahl überwacht werden, was vorzugsweise getaktet und in Echtzeit während der Reibzeit bis kurz vor Drehungsstillstand geschieht.

Ferner sind geeignete Meßeinrichtungen zur Messung des Werkstückweges und der Werkstückverkürzung vorhanden. Diese sind ebenfalls wie die vorstehend erwähnten anderen Meßeinrichtungen mit der Maschinensteuerung (12) verbunden.

Die verschiedenen Meßeinrichtungen können nicht nur zur Überwachung des Reibschweißvorgangs und dessen Parametern, sondern auch zur Steuerung und zur Regelung des Reibschweißvorgangs eingesetzt werden. So ist es beispielsweise möglich, beim Wunsch nach einer genaueren Einhaltung des Drehwinkels eine Bremsvorrichtung, vorzugsweise eine elektrische Motorbremse, einzusetzen, die den Drehantrieb (5) in Abhängigkeit vom gemessenen Drehwinkel aktiv bremst und evtl. stillsetzt. Diese Bremsvorrichtung kann auf der Seite des Drehantriebs (5) angeordnet sein und auf diesen direkt einwirken. Alternativ kann auch eine erhöhte Bremswirkung über eine höhere Reibkraft und die Stauchvorrichtung (11) erzielt werden.

### BEZUGSZEICHENLISTE

- 1: Reibschweißvorrichtung
- 2: Werkstück, hart
- 3: Werkstück, weich
- 4: Spanneinrichtung
- 5: Drehantrieb
- 6: Getriebe
- 7: Motor
- 8: Spanneinrichtung
- 9: Drehachse
- 10: Planvorrichtung
- 11: Stauchvorrichtung
- 12: Steuerung

## Patentansprüche

1. Verfahren zum Reibschweißen von Werkstücken aus unterschiedlichen Werkstoffen oder mit unterschiedlichen Werkstoffeigenschaften, insbesondere unterschiedlicher Härte und/oder Schmelztemperatur, wobei die Werkstücke unter Reibkontakt relativ zueinander gedreht, gestoppt und gestaucht werden, dadurch **gekennzeichnet**, daß die Werkstücke (2,3) beim Reibvorgang über einen begrenzten Drehwinkel von weniger als 1080° relativ zueinander gedreht werden.

2. Verfahren nach Anspruch 1, dadurch **gekennzeichnet**, daß der Drehwinkel der Relativdrehung ca. 180° bis 720°, vorzugsweise 290° bis 430° beträgt.

3. Verfahren nach Anspruch 1 oder 2, dadurch **gekennzeichnet**, daß der Drehwinkel direkt oder mittelbar gemessen wird.

4. Verfahren nach Anspruch 1, 2 oder 3, dadurch **gekennzeichnet**, daß der Drehwinkel über die Reibzeit und Abschaltung des Drehantriebs (5) gesteuert wird.

5. Verfahren nach Anspruch 4, dadurch **gekennzeichnet**, daß die Reibzeit auf die Massenträgheiten der bewegten Maschinenteile und des bewegten Werkstücks (2) sowie die Reibkräfte abgestimmt ist.

6. Verfahren nach einem der Ansprüche 1 bis 5, dadurch **gekennzeichnet**, daß der Drehantrieb (5) im Leerlauf mit einer begrenzten Drehzahl von ca. 50 bis 500 U/min, vorzugsweise ca. 300 U/min läuft.

7. Verfahren nach einem der Ansprüche 1 bis 6, dadurch **gekennzeichnet**, daß das widerstandsfähigere Werkstück (2) gedreht wird.

8. Verfahren nach einem der Ansprüche 1 bis 7, dadurch **gekennzeichnet**, daß die Reibschweißfläche des gedrehten Werkstücks (2) vor dem Reibschweißen in der Spannstellung senkrecht zur Drehachse (9) geplant wird.

9. Verfahren nach einem der Ansprüche 1 bis 8, dadurch **gekennzeichnet**, daß der Reibbeginn der Werkstücke (2,3) über eine Messung von Druck oder Kraft in der Stauchvorrichtung (11) oder den Zustellweg festgestellt wird.

10. Vorrichtung zum Reibschweißen von Werkstücken aus unterschiedlichen Werkstoffen oder mit unterschiedlichen Werkstoffeigenschaften, insbesondere unterschiedlicher Härte und/oder Schmelztemperatur, mit mindestens einem Drehantrieb und einer Stauchvorrichtung, welche die Werkstücke relativ zueinander drehen, stoppen und unter Stauchdruck aneinanderpressen, wobei die Reibschweißvorrichtung eine Einrichtung zum Feststellen des Reibbeginns und eine Steuerung zur Einstellung der Reibzeit oder des Drehwinkels aufweist, dadurch **gekennzeichnet**, daß die Steuerung (12) derart ausgebildet ist, daß sie Relativdrehungen der Werkstücke (2,3) beim Reibvorgang über einen begrenzten Drehwinkel von weniger als 1080° steuert.

11. Vorrichtung nach Anspruch 10, dadurch **gekennzeichnet**, daß die Steuerung (12) auf abgestimmte kurze Reibzeiten zur Erzielung der gewünschten Drehwinkel einstellbar ist.

12. Vorrichtung nach Anspruch 10 oder 11, dadurch **gekennzeichnet**, daß die Steuerung (12) auf Drehwinkel von ca. 180° bis 720°, vorzugsweise 290° bis 430°, eingestellt ist.

13. Vorrichtung nach Anspruch 10, 11 oder 12, dadurch **gekennzeichnet**, daß die Reibschweißvorrichtung (1) eine Einrichtung zum Messen oder Berechnen des Drehwinkels und/oder der Drehzahl des Werkstücks (2) aufweist.

14. Vorrichtung nach einem der Ansprüche 10 bis 13, dadurch **gekennzeichnet**, daß der Drehantrieb (5) eine Leerlaufdrehzahl von ca. 50 bis 500 U/min, vorzugsweise ca. 300 U/min, aufweist.

15. Vorrichtung nach einem der Ansprüche 10 bis 14, dadurch **gekennzeichnet**, daß die Reibschweißvorrichtung (1) eine Planvorrichtung (10) für das gedrehte Werkstück (2) aufweist.

## Claims

1. Process for friction welding of workpieces made from different materials or with different materials properties, in particular different hardnesses and/or melting temperatures, the workpieces, in frictional contact, being rotated relative to one another, stopped and forged, characterized in that the workpieces (2, 3) are rotated relative to one another, during the friction operation, over a limited angle of rotation of less than 1080°.

2. Process according to Claim 1, characterized in that the angle of rotation of the relative rotation is approx. 180° to 720°, preferably 290° to 430°.

3. Process according to Claim 1 or 2, characterized in that the angle of rotation is measured directly or indirectly.

4. Process according to Claim 1, 2 or 3, characterized in that the angle of rotation is controlled using the friction time and by switching off the rotary drive (5).

5. Process according to Claim 4, characterized in that the friction time is adapted to the mass moments of inertia of the moving machine parts and of the moving workpiece (2) and to the friction forces.

6. Process according to one of Claims 1 to 5, characterized in that the rotary drive (5), in idling mode, runs at a limited rotational speed of approx. 50 to 500 rpm, preferably approx. 300 rpm.

7. Process according to one of Claims 1 to 6, characterized in that the more resistant workpiece (2) is rotated.

8. Process according to one of Claims 1 to 7, characterized in that the friction-welding surface of the rotated workpiece (2) undergoes a facing operation perpendicular to the axis of rotation (9) in the clamped position prior to the friction welding.

9. Process according to one of Claims 1 to 8, characterized in that the beginning of friction between the workpieces (2,3) is detected by measuring pressure or force in the forging device (11) or the in-feed travel.

10. Device for friction welding of workpieces made from different materials or with different materials properties, in particular different hardnesses and/or melting temperatures, having at least one rotary drive and a forging device, which rotate the workpieces relative to one another, stop the workpieces and press them together under forging pressure, the friction-welding device having a device for detecting the start of friction and a control unit for adjusting the friction time or the angle of rotation, characterized in that the control unit (12) is designed in such a manner that it controls relative rotations of the workpieces (2,3) during the friction operation over a limited angle of rotation of less than 1080°.

11. Device according to Claim 10, characterized in that the control unit (12) can be set to adapted short friction times in order to achieve the desired angle of rotation.

12. Device according to Claim 10 or 11, characterized in that the control unit (12) is set to angles of rotation of approx. 180° to 720°, preferably 290° to 430°.

13. Device according to Claim 10, 11 or 12, characterized in that the friction-welding device (1) has a device for measuring or calculating the angle of rotation and/or the rotational speed of the workpiece (2).

14. Device according to one of Claims 10 to 13, characterized in that the rotary drive (5) has an idle speed of approx. 50 to 500 rpm, preferably approx. 300 rpm.

15. Device according to one of Claims 10 to 14, characterized in that the friction-welding device (1) has a facing device (10) for the rotated workpiece (2).

## Revendications

1. Procédé pour le soudage par friction de pièces en des matériaux différents ou en des matériaux possédant des propriétés différentes, notamment une dureté et/ou un point de fusion différent, les pièces étant entraînées en rotation l'une par rapport à l'autre avec un contact par friction, étant arrêtées et refoulées, caractérisé en ce que lors de l'opération de friction, on fait tourner les pièces (2, 3) l'une par rapport à l'autre sur un angle de rotation limité de moins de 1080°.

2. Procédé selon la revendication 1, caractérisé en ce que l'angle de la rotation relative est d'environ 180° à 720°, de préférence de 290° à 430°.

3. Procédé selon la revendication 1 ou 2, caractérisé en ce qu'on mesure directement ou indirectement l'angle de rotation.

4. Procédé selon la revendication 1, 2 ou 3, caractérisé en ce qu'on commande l'angle de rotation par l'intermédiaire du temps de friction et de l'arrêt du dispositif d'entraînement en rotation (5).

5. Procédé selon la revendication 4, caractérisé en ce qu'on ajuste le temps de friction sur les inerties de masse des pièces de machine déplacées et de la pièce (2) déplacée ainsi que sur les forces de friction.

6. Procédé selon l'une des revendications 1 à 5, caractérisé en ce que le dispositif d'entraînement en rotation (5) tourne à vide à une vitesse limitée d'environ 50 à 500 tours/minute, de préférence d'environ 300 tours/minute.

7. Procédé selon l'une des revendications 1 à 6, caractérisé en ce qu'on fait tourner la pièce (2) plus résistante.

8. Procédé selon l'une des revendications 1 à 7, caractérisé en ce qu'avant le soudage par friction, la surface de soudage par friction de la pièce (2) entraînée en rotation est surfacée, dans la position de serrage, perpendiculairement à l'axe de rotation (9).

9. Procédé selon l'une des revendications 1 à 8, caractérisé en ce qu'on détermine le début de la friction des pièces (2, 3) par une mesure de la pression ou de la force dans le dispositif de refoulement (11) ou par l'intermédiaire de la course d'avance.

10. Dispositif pour le soudage par friction de pièces en des matériaux différents ou en des matériaux possédant des propriétés différentes, notamment une dureté et/ou un point de fusion différent, comprenant au moins un dispositif d'entraînement en rotation et un dispositif de refoulement qui font tourner les pièces l'une par rapport à l'autre, les arrêtent et les compriment l'une contre l'autre sous l'effet d'une pression de refoulement, le dispositif de soudage par friction présentant un dispositif pour détecter le début de la friction et une commande pour régler le temps de friction ou l'angle de rotation, caractérisé en ce que la commande (12) est réalisée de telle sorte qu'elle commande des rotations relatives des pièces (2, 3) lors de l'opération de friction sur un angle de rotation limité de moins de 1080°.

11. Dispositif selon la revendication 10, caractérisé en ce que la commande (12) peut être réglée sur des temps de friction courts ajustés afin d'obtenir l'angle de rotation souhaité.

12. Dispositif selon la revendication 10 ou 11, caractérisé en ce que la commande (12) est réglée sur des angles de rotation d'environ 180° à 720°, de préférence de 290° à 430°.

13. Dispositif selon la revendication 10, 11 ou 12, caractérisé en ce que le dispositif de soudage par friction (1) présente un dispositif pour mesurer ou calculer l'angle de rotation et/ou la vitesse de rotation de la pièce (2).

14. Dispositif selon l'une des revendications 10 à 13, caractérisé en ce que le dispositif d'entraînement en rotation (5) présente une vitesse de marche à vide d'environ 50 à 500 tours/minute, de préférence d'environ 300 tours/minute.

15. Dispositif selon l'une des revendications 10 à 14, caractérisé en ce que le dispositif de soudage par friction (1) présente un dispositif de surfaçage (10) pour la pièce (2) entraînée en rotation.
